(19) Europäisches Patentamt

European Patent Office

Office européen des brevets

(11) **EP 0 724 935 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.⁷: **B25B 23/145**, B25B 23/14, B23P 19/06

(21) Anmeldenummer: **96100515.4**

(22) Anmeldetag: **16.01.1996**

(54) **Impulsschrauber und Verfahren zum Anziehen einer Schraubverbindung mittels des Impulsschraubers**

Impact wrench and procedure for tightning a fastener connection therewith

Clé à choc et procédé pour serrer une fixation vissée avec cette clé à choc

(84) Benannte Vertragsstaaten:
**DE FR GB IT SE**

(30) Priorität: **03.02.1995 DE 19503524**

(43) Veröffentlichungstag der Anmeldung:
**07.08.1996 Patentblatt 1996/32**

(73) Patentinhaber: **ROBERT BOSCH GMBH**
**70442 Stuttgart (DE)**

(72) Erfinder:
• **Müller, Gerhold, Dipl.-Ing.**
  **D-70565 Stuttgart (DE)**
• **Wolf, Peter, Dipl.-Ing. (FH)**
  **D-70771 Leinfelden-Echterdingen (DE)**
• **Veitinger, Heinz, Dipl.-Ing. (FH)**
  **D-71540 Murrhardt (DE)**

(56) Entgegenhaltungen:
| | |
|---|---|
| **EP-A- 0 460 920** | **WO-A-92/03665** |
| **DE-A- 3 128 558** | **DE-A- 4 243 068** |
| **DE-A- 4 243 069** | **US-A- 3 969 810** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Stand der Technik

Die Erfindung geht aus von einem Impulsschrauber nach dem Oberbegriff des Anspruchs 1 bzw. von einem Verfahren zum Anziehen einer Schraubverbindung mittels des Impulsschraubers nach dem Oberbegriff des Anspruchs 3 (siehe DE-A-42 43 068). Es sind schon Impulsschrauber bekannt, die im Gegensatz zu herkömmlichen Schraubern ein impulsförmiges Anziehmoment auf die Schraubverbindung ausüben, was den Vorteil hat, daß mit vergleichsweise kleiner Antriebsleistung und kleinem aufzubringendem Haltemoment relativ große Anzieh- bzw. Lösedrehmomente für Schraubverbindungen aufbringbar sind. Nachteilig ist, daß bei derartigen Impulsschraubern das erreichbare Anziehdrehmoment der Schraubverbindung in Abhängigkeit vom Schraubfall (hart/weich) und von Reibeinflüssen relativ starken Schwankungen unterworfen ist. Daher müssen bei mittels Impulsschraubern anzuziehenden Schraubverbindungen relativ große Toleranzen festgelegt werden. Im Zweifel ist eine Schraubverbindung vom Konstrukteur höher zu dimensionieren, als bei exakt einhaltbarem Drehmoment notwendig wäre.

Aus der DE 42 43 069 A1 ist ein Impulswerkzeug bekannt, bei dem neben einer Drehmomenterfassung zur Abschaltung des Impulswerkzeugs zusätzlich eine Impuls- oder Drehwinkelzählung des Schraubers erfolgt, wobei die bis zur Beendigung des Schraubvorgangs gezählten Impulse bzw. der ermittelte Drehwinkel zusätzlich zur Bestimmung der Qualität der Schraubverbindung herangezogen werden soll. Selbst wenn dadurch fehlerhaft angezogene Schraubverbindungen erkannt werden können, so wird bei diesem Impulswerkzeug weder der Toleranzbereich verkleinert, noch wird das Entstehen fehlerhafter Schraubverbindungen verhindert. Infolge hoher Fehlerbeseitigungskosten kommt in der heutigen Fertigung der Fehlervermeidung jedoch eine weitaus größere Bedeutung zu.

Vorteile der Erfindung

Der erfindungsgemäße Impulsschrauber mit den kennzeichnenden Merkmalen des Anspruchs 1 bzw. das erfindungsgemäße Verfahren mit den kennzeichnenden Merkmalen des Anspruchs 3 hat demgegenüber den Vorteil, daß hinsichtlich des erzielbaren Anziehdrehmoments der Schraubverbindung eine höhere Genauigkeit erzielbar ist, wodurch engere Toleranzen für die Schraubverbindung einhaltbar sind. Darüber hinaus wird das Entstehen fehlerhaft angezogener Schraubverbindungen weitgehend vermieden.

Durch die in den Unteransprüchen aufgeführten Maßnahmen sind vorteilhafte Weiterbildungen und Verbesserungen des im Anspruch 1 genannten Impulsschraubers bzw. des im Anspruch 3 genannten Verfahrens möglich.

Zeichnung

Ein Ausführungsbeispiel der Erfindung ist in der Zeichnung und in der nachfolgenden Beschreibung näher erläutert. Es zeigen Figur 1 ein Blockschaltbild eines Impulsschraubers, Figur 2 eine Zusammenstellung verschiedener Antriebsgrößen des Impulsschraubers beim Anziehen einer Schraubverbindung und Figur 3 ein Flußdiagramm zu einem erfindungsgemäßen Einschraubverfahren.

Beschreibung des Ausführungsbeispiels

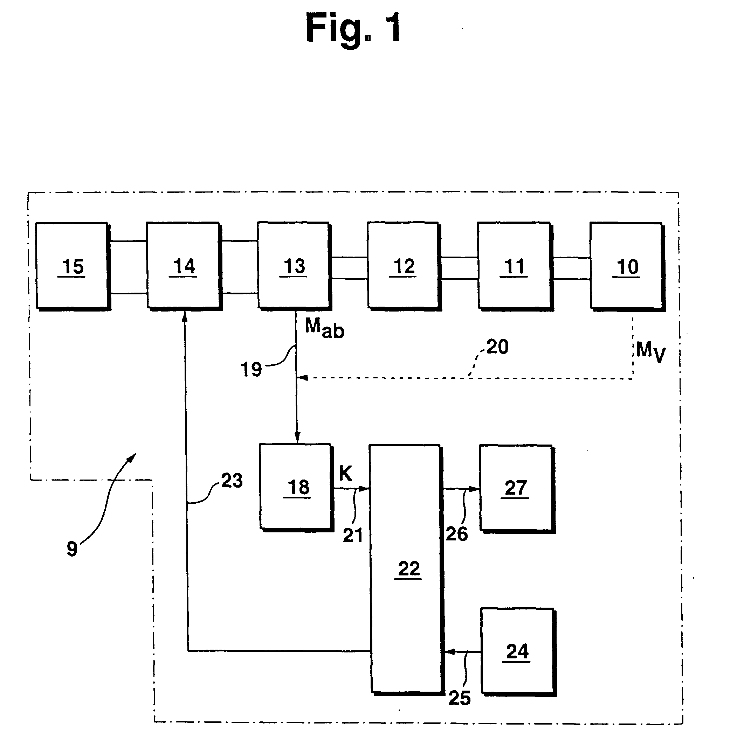

In Figur 1 ist mit 10 eine Schraubverbindung bezeichnet, die mittels eines Impulsschraubers 9 anzuziehen ist. Der Impulsschrauber 9 weist ein Impulsschlagwerk 11 auf, das über ein Getriebe 12 von einem Antriebsmotor 13 antreibbar ist. Der Antriebsmotor wird über eine Leistungsstufe 14 mit elektrischer Antriebsenergie aus einer Energiequelle 15, beispielsweise einem Akku versorgt. Der Impulsschrauber 9 weist ferner eine Sensorik 18 auf, die den aktuellen Wert einer Kenngröße K ermittelt, wobei die Kenngröße K ein abgegebenes Moment $M_{ab}$ des Impulsschraubers und/oder ein Verschraubungsmoment $M_V$ der Schraubverbindung 10 kennzeichnet. Die Sensorik 18 ist hierzu über eine erste Verbindung 19 mit dem Antriebsmotor 13 und/oder über eine zweite, in Figur 1 gestrichelt angedeutete Verbindung 20 mit der Schraubverbindung 10 verbunden. Auf die Art und Weise, wie die Ermittlung des Wertes der Kenngröße K erfolgt, wird später näher eingegangen.

Die Sensorik 18 steht ihrerseits über eine dritte Verbindung 21 mit einer Steuereinrichtung 22 in Verbindung. Die Steuereinrichtung 22 wertet die von der Sensorik 18 ermittelten Werte der Kenngröße K aus und sendet entsprechende Steuerbefehle über eine vierte Verbindung 23 an die Leistungsstufe 14, die dann den Antriebsmotor 13 entsprechend ansteuert.

Die Steuereinrichtung 22 weist ferner eine Eingabevorrichtung 24 auf, mittels der der Bediener des Impulsschraubers 9 den gewünschten Ablauf des Schraubvorgangs über eine fünfte Verbindung 25 der Steuereinrichtung 22 vorgeben kann. Eine sechste Verbindung 26 besteht zwischen der Steuereinrichtung 22 und einer Anzeigevorrichtung 27, so daß beispielsweise die ermittelten Werte der Kenngröße K dem Bediener mitgeteilt werden können.

Die Elemente 13, 18, 22 und 14 bzw. 13, 12, 11, 10, 18, 22 und 14 bilden einen geschlossenen Regelkreis. Dies bietet den Vorteil, daß auf den Schraubvorgang während des Anziehens je nach Verschraubungszustand bzw. Verschraubungsbedingungen individuell Einfluß genommen werden kann. Je nach Genauigkeitsanforderungen erfolgt dabei der Abgriff der Kenngröße K durch die Sensorik 18 entweder am Antriebsmotor 13 durch Ermittlung des jeweils abgegebenen Momentes $M_{ab}$, oder direkt an der Schraubverbindung 10 durch Ermittlung des jeweils vorliegenden Verschraubungsmomentes $M_V$.

Die Erfassung des Verschraubungsmomentes $M_V$ als Kenngröße K bietet dabei die größte Genauigkeit, da dabei das tatsächlich in der Schraubverbindung 10 vorliegende Verschraubungsmoment $M_V$, also die beim Schraubvorgang einzustellende Größe selbst ermittelt wird und diese Größe direkt mit einem angestrebten Verschraubungs-Sollmoment $M_{soll}$ vergleichbar ist. Verfahren zur Ermittlung des Verschraubungsmomentes $M_V$ in der Schraubverbindung 10 sind bereits bekannt und nicht Gegenstand der vorliegenden Anmeldung. So ist beispielsweise bereits vorgeschlagen worden (WO 92/03665) den Verschraubungszustand nach dem Ultraschall-Laufzeitmeßverfahren zu ermitteln. Allerdings ist dieses Verfahren relativ aufwendig und nur bei höchsten Genauigkeitsanforderungen notwendig.

Werden geringere Anforderungen an die Genauigkeit des zu erreichenden Verschraubungsmomentes gestellt, ist es ausreichend, eine das abgegebene Moment $M_{ab}$ des Impulsschraubers 9 kennzeichnende Größe als Kenngröße K zu verwenden, denn das jeweilige erreichte Verschraubungsmoment $M_V$ ist vom abgegebenen Momentes $M_{ab}$ abhängig. Von Einfluß sind hierbei jedoch die jeweils vorliegenden Verschraubungsbedingungen (z.B. Reibung), so daß aus dem abgegebenen Moment $M_{ab}$ nur näherungsweise auf das Verschraubungsmoment $M_V$ geschlossen werden kann.

Zur Ermittlung des jeweils abgegebenen Momentes $M_{ab}$ als Wert für die Kenngröße K können beispielsweise im Antriebsstrang untergebrachte Drehmomentsensoren verwendet werden. Da dies ebenfalls relativ aufwendig ist, werden im folgenden Möglichkeiten beschrieben, auf andere Weise eine das abgegebene Moment $M_{ab}$ kennzeichnende Größe zu erfassen, welche als Kenngröße K des Schraubvorganges dienen kann.

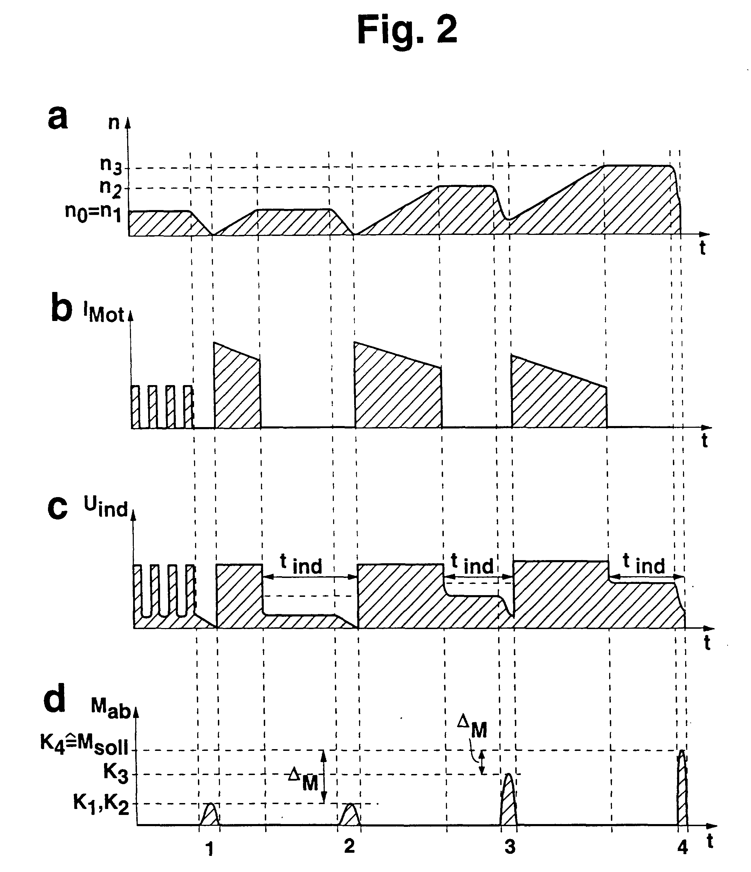

In den Diagrammen a bis d der Figur 2 sind verschiedene Antriebsgrößen über dem Zeitverlauf eines exemplarischen Schraubvorgangs mit insgesamt vier Impulsabgaben dargestellt. In Diagramm a ist die Drehzahl n des Antriebsmotors 13, in Diagramm b der Verlauf des Motorstroms $i_{mot}$ , in Diagramm c der Verlauf der induzierten Ankerspannung $U_{ind}$ und in Diagramm d das abgegebene Moment $M_{ab}$ aufgetragen. Durch Vergleichen der Diagramme untereinander zu bestimmten Zeitpunkten erkennt man, daß zwischen den dargestellten Größen eine Abhängigkeit besteht. Durch die Abhängigkeit der Antriebsgrößen untereinander sind weitere Möglichkeiten für die Ermittlung des abgegebenen Momentes $M_{ab}$ und damit der Kenngröße K gegeben.

Die im Diagramm a dargestellte Motordrehzahl n bestimmt die der Schwungmasse des Antriebsmotors 13 entnehmbare Energie. Der Vergleich mit Diagramm d zeigt, daß das infolge der Schwungmasse auf die Schraubverbindung 10 abgegebene Moment $M_S$ von der zeitlichen Änderung der Motordrehzahl $\Delta n/dt$ abhängt. Falls der Antriebsmotor 13 während der Drehmomentabgabe angetrieben wird, muß das vom Antriebsmotor 13 aufgebrachte Antriebsmoment $M_{an}$ zusätzlich berücksichtigt werden. Das insgesamt abgegebene Moment $M_{ab}$ ergibt sich dann näherungsweise durch die Beziehung

$$M_{ab} = M_{an} + M_S = c_i * I_{mot} + J * d\omega/dt,$$

wobei $M_{ab}$ = abgegebenes Moment, $M_{an}$ = vom Antriebsmotor 13 aufgebrachtes Antriebsmoment, $M_S$ = Schwungmoment, $c_i$ = Motorkonstante, $I_{mot}$ = Motorstrom, J = Massenträgheit, $\omega$ = Winkelgeschwindigkeit und t = Zeit angibt.

Wie aus Figur 2, Diagramm a hervorgeht, ist bei jeder Impulsabgabe ein bestimmter Rückgang der Motordrehzahl n zu verzeichnen, der entweder durch einen Drehzahlgeber oder gemäß Figur 2, Diagramm c durch die Messung der induzierten Ankerspannung $U_{ind}$ bei unbestromtem Antriebsmotor 13 erfaßbar ist.

Die Messung der induzierten Ankerspannung $U_{ind}$ bei unbestromtem Antriebsmotor 13 im Zeitraum $t_{ind}$ kann die Berechnung des abgegebenen Momentes $M_{ab}$ näherungsweise durch die Beziehung

$$M_{ab} = J/c_i * dU_{ind}/dt,$$

erfolgen, wobei $M_{ab}$ = abgegebenes Moment, J = Massenträgheit, $c_i$ = Motorkonstante, $U_{ind}$ = induzierte Ankerspannung, t = Zeit bedeutet.

Darüber hinaus besteht die Möglichkeit, die Kenngröße K durch Berechnung des Abgabemomentes $M_{ab}$ aus dem Motorstrom $I_{mot}$ nach folgender Proportionalität zu bestimmen:

$$M_{ab} = J * R/c_i * dI_{mot}/dt + c_i * I_{mot},$$

wobei $M_{ab}$ = abgegebenes Moment, J = Massenträgheit, R = Ersatzinnenwiderstand, $c_i$ = Motorkonstante, $I_{mot}$ = Motorstrom.

Das auf eine dieser beschriebenen Arten ermittelte bzw. das mittels Drehmomentsensor direkt gemessene Abgabemoment $M_{ab}$ dient nun als den Schraubvorgang kennzeichnende Kenngröße K, während beim eingangs beschriebenen Verfahren das tatsächlich vorhandene das Verschraubungsmoment $M_V$ in der Schraubverbindung als Kenngröße K herangezogen wird. Die Ermittlung des jeweiligen Wertes der Kenngröße K erfolgt während oder nach wenigstens einer diskreten Impulsabgabe des Impulsschraubers 9.

Üblicherweise wird beim Schrauben mittels Impulsschraubern der erste Impuls erst dann ausgelöst, wenn der Schraubenkopf die Kopfauflagefläche erreicht und damit dem Impulsschlagwerk ein deutlich höherer Widerstand entgegengesetzt wird. Ist die Schwungmasse des Impulsschraubers infolge einer zu hoch einge-

stellten Anfangsdrehzahl $n_0$ des Antriebsmotors 13 sehr hoch eingestellt, kann es passieren, daß bereits nach der ersten Impulsabgabe des Impulsschlagwerkes 11 in der Schraubverbindung 13 ein zu hohes Verschraubungsmoment $M_V$ erzeugt wird. Um dies zu verhindern, stellt der Antriebsmotor 13 erfindungsgemäß zunächst eine Antriebsdrehzahl $n_0$ bereit, die in jedem Falle einen niedrigeren Wert $K_0$ der Kenngröße K nach der ersten Impulsabgabe ergibt, als dem angestrebten Wert $K_{soll}$ entspricht.

Wegen einer zu hohen Streuung der Verschraubungsbedingungen (z. B. unterschiedliche Reibwerte in der Kopfauflage) ist das Anziehen mit nur einer einzigen Impulsabgabe relativ ungenau. Insbesondere bei hartem Schraubfall und relativ hoher Antriebsdrehzahl $n_0$ infolge des dann hohen dynamischen Trägheitsmomentes und niedrigen Reibwerten (Gleitreibung in der Schraubenkopfauflage statt Haftreibung) beim Übergang vom Einschrauben zum Festschrauben wäre zudem das beschriebene Überschreiten des Sollwertes $K_{soll}$ zu befürchten. Aus diesem Grund wird der Verschraubungsvorgang in der Regel wenigstens zweistufig durchgeführt. Selbstverständlich könnte bei einer Verringerung der Streuung bzw. bei Erfassbarkeit der Einflußfaktoren auch bereits nach der ersten Impulsabgabe das angestrebte Verschraubungsmoment $M_V$, dargestellt durch die Kenngröße $K_{soll}$, erreicht sein.

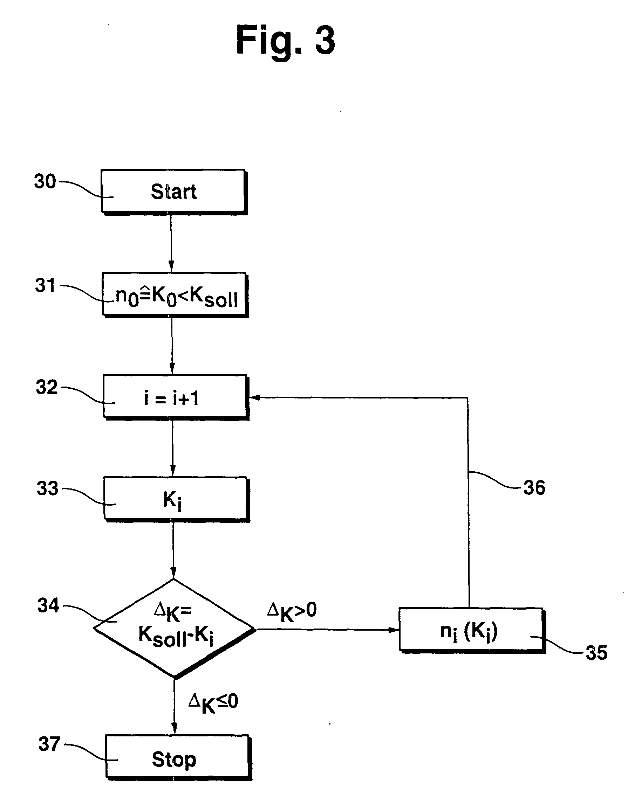

In Figur 3 ist der erfindungsgemäße Verschraubungsvorgang in Form eines Flußdiagramms dargestellt. Die Bezugszahl 30 kennzeichnet einen Startvorgang des Anziehverfahrens, der dann in Ziffer 31 nach einer Anlaufzeit die Anfangsdrehzahl $n_0$ ergibt, die einem Wert $K_0$ entspricht, der in jedem Falle kleiner als $K_{soll}$ ist. Die Schraubverbindung wird in aller Regel mit dieser Anfangsdrehzahl eingedreht, bis der Schraubenkopf und/oder die Mutter die jeweilige Auflage erreicht. Erst dann kommt es zu einer ersten Impulsabgabe des Impulsschlagwerkes 11, da dann das Auslösemoment des Impulsschraubers 9 überschritten wird. Diese Impulsabgabe ist mit der Ziffer 32 gekennzeichnet. Während oder nach dieser ersten Impulsabgabe wird von der Sensorik 18 der aktuelle Wert $K_i$, in diesem Fall der erste Wert $K_1$ für i = 1 , ermittelt, was mit der Bezugszahl 33 gekennzeichnet ist. Beim anschließenden Vergleich 34 wird die Differenz zwischen dem angestrebten Wert $K_{soll}$ und dem aktuellen Wert $K_i$, also $K_1$ für i = 1, der Kenngröße K gebildet. Da gemäß Anfangsbedingung nach dem ersten Impulsvorgang $K_1$ kleiner als $K_{soll}$ sein muß, ist die Bedingung $\Delta K$ größer als Null erfüllt. Die Steuereinrichtung 22 legt dann im mit 35 gekennzeichneten Verfahrensschritt in Abhängigkeit des aktuellen Wertes für $K_1$ eine entsprechende Antriebsdrehzahl $n_1$ für die zweite Impulsabgabe 32 fest. Dies geschieht beispielsweise mittels eines in der Steuereinrichtung 22 programmierten Algorithmus, bzw. einer darin abgespeicherten Wertetabelle. Algorithmus bzw. Wertetabelle sind dabei auf die jeweilige Ermittlungsart der Kenngröße K abgestimmt.

Es kommt dann zu einer zweiten Impulsabgabe 32 (i=2), durch die wiederum ein zweiter Wert für $K_2$ erzeugt wird, der gemäß Schritt 33 ermittelt wird. Der Vergleicher 34 führt dann erneut eine Differenzbildung durch, wobei entweder die Schleife 36 unter Vorgabe einer neuen Antriebsdrehzahl $n_2$ erneut durchlaufen wird, oder bei Vorliegen der Bedingung $\Delta K \leq 0$ der Schraubvorgang abgebrochen wird (Schritt 37). Insgesamt wird die Schleife 36 so oft durchlaufen, bis die genannte Bedingung $\Delta K \leq 0$ erfüllt ist.

Auf diese Weise ist eine wenigstens zweistufige, schrittweise Annäherung an den angestrebten Verschraubungs-Endzustand $K_{soll}$ möglich. Der Einfluß der Streuung der Verschraubungsbedingungen wird auf diese Weise verringert. Der Benutzer kann über die Eingabevorrichtung 24 den bei der Festlegung 35 von $n_i$ zugrundegelegten Algorithmus in gewünschter Weise ändern, insbesondere einen bestimmten Ablauf des Schraubverfahrens festlegen. So kann sich die Antriebsdrehzahl $n_i$ mit steigender Zahl an Impulsabgaben programmgemäß erhöhen, früher oder später aber auch wieder absinken. Bei dem in Figur 2 dargestellten beispielhaften Einschraubvorgang wird gemäß Diagramm a die Antriebsdrehzahl $n_1$ nach der ersten Impulsabgabe i=1 zunächst nochmal auf den Anfangswert $n_0$ gebracht und dann nach der zweiten Impulsabgabe i=2 auf $n_2$, und nach der dritten Impulsabgabe i=3 dann weiter auf $n_3$ erhöht, bis die Bedingung $\Delta K \leq 0$ nach der vierten Impulsabgabe erfüllt ist und der Schraubvorgang abgebrochen wird. Die dem abgegebenen Moment $M_{ab}$ jeweils entsprechenden Werte $K_i$ der Kenngröße K sind in Diagramm d aufgetragen.

Durch die Anzeigevorrichtung 27 können dem Bediener Informationen über den korrekten Ablauf des Anziehverfahrens gegeben werden. Durch die schrittweise Annäherung an das gewünschte Schraubmoment lassen sich unterschiedliche Verschraubungsbedingungen selbstregulierend ausgleichen. Der jeweils vorliegende Verschraubungszustand kann durch die Schraubersteuerung 22 erfaßt und die jeweilige Antriebsgröße, z.B. n oder $I_{mot}$, individuell und automatisch festgelegt werden.

**Patentansprüche**

1. Schraubvorrichtung, insbesondere Handschrauber, mit einem drehzahlvariablen Antriebsmotor (13), mit einem vom Antriebsmotor angetriebenen, ein impulsförmiges Moment (M) abgebenden Impulsschlagwerk (11) und mit Mitteln (18) zum Erfassen wenigstens einer ein Verschraubungsmoment ($M_V$) einer Schraubverbindung (10) und/oder ein abgegebenes Moment ($M_{ab}$) des Impulsschlagwerks (11) charakterisierenden Kenngröße (K) während oder nach wenigstens einer Impulsabgabe, wobei die Schraubvorrichtung (9) eine Steuereinrichtung (22) aufweist, in der die ermittelte Kenngröße (K) auswertbar ist und mittels der eine Antriebsgröße der Schraubvorrichtung (9), beispielsweise eine Antriebs-Solldrehzahl (n) des Antriebsmotors (13), in Abhängigkeit des Wertes der Kenngröße (K) festlegbar ist, **dadurch gekennzeichnet, daß** der Antriebsmotor (13) elektrisch betrieben ist und nach Erreichen eines Sollwertes ($K_{soll}$) der Kenngröße (K) ein Abbruch des Schraubvorganges vorgesehen ist.

2. Schraubvorrichtung nach Anspruch 1, **dadurch gekennzeichnet, daß** die Steuereinrichtung (22) mit einer Eingabevorrichtung (24) und/oder einer Anzeigevorrichtung (27) verbunden ist.

3. Verfahren zum wenigstens zweistufigen Anziehen einer Schraubverbindung (10) mittels eines Impulsschraubers (9) mit drehzahlvariablem Antriebsmotor (13), bei welchem Verfahren wenigstens eine ein Verschraubungsmoment ($M_V$) der Schraubverbindung (10) und/oder ein abgegebenes Moment ($M_{ab}$) des Impulsschlagwerks (11) kennzeichnende Kenngröße (K) während oder nach einer Impulsabgabe des Impulsschraubers (9) ermittelt wird, wobei in einer ersten Stufe zumindest für die erste Impulsabgabe eine Antriebsgröße, beispielsweise eine Antriebs-Solldrehzahl (n), auf einen ersten Wert ($n_0$) eingestellt wird, der einem zu erwartenden ersten Wert ($K_0$) der Kenngröße entspricht, welcher betragsmäßig kleiner als ein angestrebter Wert ($K_{soll}$) der Kenngröße (K) für den Verschraubungs-Endzustand ist, daß der aktuelle Wert ($K_i$) der Kenngröße (K) während oder nach der ersten Impulsabgabe ermittelt wird und daß in mindestens einer weiteren Stufe während des Anziehvorgangs der Wert der Antriebsgröße (n) in Abhängigkeit des ermittelten Wertes ($K_i$) der aktuellen Kenngröße (K) festgelegt wird, **dadurch gekennzeichnet, daß** der Antriebsmotor (13) elektrisch betrieben ist und **daß** der Schraubvorgang dann abgebrochen wird, wenn der angestrebte Wert ($K_{soll}$) der Kenngröße (K) erreicht ist.

4. Verfahren nach Anspruch 3, **dadurch gekennzeichnet, daß** die Antriebsgröße nach Ermittlung eines ersten Wertes ($K_1$) für die Kenngröße (K) erhöht wird.

5. Verfahren nach Anspruch 3 oder 4, **dadurch gekennzeichnet, daß** als Kenngröße (K) das tatsächlich in der Schraubverbindung vorliegende Verschraubungmoment ($M_V$) beispielsweise durch ein Ultraschallwelllaufzeit-Meßverfahren, ermittelt wird.

6. Verfahren nach Anspruch 3 oder 4, **dadurch gekennzeichnet, daß** als Kenngröße (K) eine zum abgegebenen Moment ($M_{ab}$) korrelierende Antriebsgröße ermittelt wird.

7. Verfahren nach Anspruch 6, **dadurch gekennzeichnet, daß** als Kenngröße (K) ein zeitlicher Drehzahlabfall ($\Delta n/dt$) während oder nach einer Impulsabgabe ermittelt wird.

8. Verfahren nach Anspruch 6, **dadurch gekennzeichnet, daß** als Kenngröße (K) der Verlauf der induzierten Ankerspannung ($U_{ind}$) bei stromlosem Antriebsmotor (13) herangezogen wird.

9. Verfahren nach Anspruch 6, **dadurch gekennzeichnet, daß** als Kenngröße (K) der Verlauf des Motorstroms ($I_{mot}$) herangezogen wird.

## Claims

1. Screwdriving device, in particular a hand-held screwdriver, having a variable-speed drive motor (13), having an impact mechanism (11) which is driven by the drive motor and emits a moment (M) in the form of impulses, and having means (18) for detecting at least one characteristic variable (K), which characterizes a screwdriving moment ($M_V$) of a screw connection (10) and/or an emitted moment ($M_{ab}$) of the impact mechanism (11), during or after at least one impulse emission, with the screwdriving device (9) having a control device (22) in which the determined characteristic variable (K) can be evaluated and by means of which a drive variable of the screwdriving device (9), for example a required drive speed (n) of the drive motor (13), can be defined as a function of the value of the characteristic variable (K), **characterized in that** the drive motor (13) is operated electrically, and the screwdriving process is interrupted once a desired value ($K_{req}$) of the characteristic variable (K) has been reached.

2. Screwdriving device according to Claim 1, **characterized in that** the control device (22) is connected to an input device (24) and/or an indication device (27).

3. Method for tightening a screw connection (10) in at least two stages by means of an impact screwdriver (9) having a variable-speed drive motor (13), in the case of which method at least one characteristic variable (K), which characterizes a screwdriving moment ($M_V$) of the screw connection (10) and/or an emitted moment ($M_{ab}$) of the impact mechanism (11), is determined during or after an impulse emission from the impact screwdriver (9), with a drive variable, for example a required drive speed (n), being set to a first value ($n_0$) in a first stage at least for the first impulse emission, which first value ($n_0$) corresponds to a first value ($K_0$) to be expected of the characteristic variable and whose magnitude is less than a desired value ($K_{req}$) of the characteristic variable (K) for the final screw connection state, with the current value ($K_i$) of the characteristic variable (K) being determined during or after the first impulse emission, and with the value of the drive variable (n) being defined as a function of the determined value ($K_i$) of the current characteristic variable (K) in at least one further stage during the tightening process, **characterized in that** the drive motor (13) is operated electrically, and **in that** the screwdriving process is interrupted when the desired value ($K_{req}$) of the characteristic variable (K) is reached.

4. Method according to Claim 3, **characterized in that** the drive variable is increased after determining a first value ($K_1$) for the characteristic variable (K).

5. Method according to Claim 3 or 4, **characterized in that** the screwdriving moment ($M_V$) which is actually present in the screw connection is determined as the characteristic variable (K), for example by means of an ultrasound-wave propagation time measurement method.

6. Method according to Claim 3 or 4, **characterized in that** a drive variable which correlates with the emitted moment ($M_{ab}$) is determined as the characteristic variable (K).

7. Method according to Claim 6, **characterized in that** a drop in speed in the time domain ($\Delta n/dt$) during or after an impulse emission is determined as the characteristic variable (K).

8. Method according to Claim 6, **characterized in that** the profile of the induced armature voltage ($U_{ind}$) when no current is flowing through the drive motor (13) is used as the characteristic variable (K).

9. Method according to Claim 6, **characterized in that** the profile of the motor current ($I_{mot}$) is used as the characteristic variable (K).

**Revendications**

1. Dispositif de vissage notamment visseuse à main, comportant

   - un moteur d'entraînement (13) à vitesse de rotation variable,
   - un mécanisme de frappe impulsionnelle (11) entraîné par le moteur et fournissant un couple impulsionnel (M) et
   - des moyens (18) pour saisir au moins une grandeur caractéristique (K) correspondant au couple de vissage ($M_V$) d'une liaison vissée (10) et/ou au couple fourni ($M_{ab}$) par le mécanisme de frappe impulsionnelle (11), pendant ou après au moins une impulsion,

   - le dispositif de vissage (9) comportant une installation de commande (22) qui exploite la grandeur caractéristique (K) obtenue et qui fixe une grandeur d'entraînement du dispositif de vissage (9), par exemple une vitesse de rotation de consigne d'entraînement (n) du moteur (13), en fonction de la valeur caractéristique (K),

   **caractérisé en ce que**
   le moteur (13) est un moteur électrique et dès qu'il atteint une valeur de consigne ($K_{cons}$) de la grandeur caractéristique (K), il est prévu un arrêt de l'opération de vissage.

2. Dispositif de vissage selon la revendication 1, **caractérisé en ce que** l'installation de commande (22) est reliée à un dispositif d'entrée (24) et/ou à un dispositif d'affichage (27).

3. Procédé pour réaliser un serrage au moins en deux étapes d'une liaison vissée (10) à l'aide d'une visseuse impulsionnelle (9) à moteur d'entraînement à vitesse variable (13), procédé selon lequel on détermine au moins une grandeur caractéristique (K) d'un couple de vissage ($M_V$) de la liaison vissée (10) et/ou d'un couple fourni ($M_{ab}$) par le mécanisme de frappe impulsionnelle (11) pendant ou après une impulsion fournie par la visseuse impulsionnelle (9), dans une première étape, on règle une grandeur d'entraînement par exemple une vitesse de consigne d'entraînement (n) pour la première impulsion, à une première valeur ($n_0$) qui correspond à la première valeur ($K_0$) prévisible de la grandeur caractéristique, et dont l'amplitude est inférieure à la valeur recherchée ($K_{cons}$) de la grandeur caractéristique (K) pour l'état final de vissage, on détermine la valeur actuelle ($K_i$) de la grandeur caractéristique (K) pendant ou après la première impulsion et, dans au moins une autre étape, pendant l'opération de serrage, on fixe la valeur de la grandeur d'entraînement (n) selon la valeur obtenue ($K_i$) de la grandeur caractéristique (K),
   **caractérisé en ce que**
   le moteur (13) est électrique et on arrête l'opération de vissage lorsque la grandeur caractéristique (K) atteint la valeur recherchée ($K_{cons}$).

4. Procédé selon la revendication 3, **caractérisé en ce qu'** on augmente la grandeur d'entraînement après détermination d'une première valeur ($K_1$) pour la grandeur caractéristique (K).

5. Procédé selon la revendication 3 ou 4,

**caractérisé en ce que**
comme grandeur caractéristique (K), on détermine le couple de vissage ($M_V$) effectif de la liaison vissée par exemple par un procédé de mesure de temps de parcours aux ultrasons.

6. Procédé selon la revendication 3 ou 4,
   **caractérisé en ce que**
   comme grandeur caractéristique (K) on détermine une grandeur d'entraînement en corrélation avec le couple fourni ($M_{ab}$).

7. Procédé selon la revendication 6,
   **caractérisé en ce que**
   comme grandeur caractéristique (K), on détermine une diminution de la vitesse de rotation en fonction du temps ($\Delta n/dt$) pendant ou après une impulsion.

8. Procédé selon la revendication 6,
   **caractérisé en ce que**
   comme grandeur caractéristique (K), on utilise le tracé de la tension d'induit ($U_{ind}$) lorsque le moteur (13) est coupé du courant.

9. Procédé selon la revendication 6,
   **caractérisé en ce que**
   comme grandeur caractéristique (K), on utilise la courbe du courant ($I_{mot}$) dans le moteur.

# Fig. 1

# Fig. 2

**a**

$n$

$n_3$
$n_2$
$n_0 = n_1$

$t$

**b** $I_{Mot}$

$t$

**c** $U_{ind}$

$t_{ind}$    $t_{ind}$    $t_{ind}$

$t$

**d** $M_{ab}$

$K_4 \hat{=} M_{soll}$
$K_3$
$K_1, K_2$

$\triangle_M$

$\triangle_M$

1    2    3    4   $t$

# Fig. 3

30 — Start

31 — $n_0 \hat{=} K_0 < K_{soll}$

32 — $i = i+1$

33 — $K_i$

34 — $\Delta_K = K_{soll} - K_i$

$\Delta_K > 0$

36

35 — $n_i (K_i)$

$\Delta_K \leq 0$

37 — Stop